# FASCICULE DE BREVET EUROPEEN

(11) **EP 0 998 432 B1**
(45) Date de publication et mention de la délivrance du brevet: **09.07.2003**
(21) Numéro de dépôt: 99916984.0
(22) Date de dépôt: 04.05.1999
(51) Int. Cl.: C03C 13/06, C03C 13/00

(54) **COMPOSITION DE LAINE MINERALE**
GLASWOLLEZUSAMMENSETZUNG
MINERAL WOOL COMPOSITION

(30) Priorité: 06.05.1998 FR 9805708
(43) Date de publication de la demande: 10.05.2000
(73) Titulaire: SAINT-GOBAIN ISOVER, 92400 Courbevoie (FR)
(72) Inventeur: De MERINGO, Alain, F-75005 Paris (FR); BERNARD, Jean-Luc, F-60600 Clermont (FR); LAFFON, Fabrice, F-75018 Paris (FR)
(74) Mandataire: Le Cam, Stéphane Georges Elie
(86) Numéro de dépôt international: FR9901055
(87) Numéro de publication internationale: WO99057073

(56) Documents cités:
- WO-A-96/14274
- WO-A-96/14454
- DE-U- 29 709 025
- GB-A- 2 220 654

## Description

La présente invention concerne le domaine des laines minérales artificielles. Elle vise plus particulièrement les laines minérales destinées à fabriquer des matériaux d'isolation thermique et/ou acoustique ou des substrats de culture hors-sol.

Elle s'intéresse plus particulièrement aux laines minérales du type laine de verre.

Usuellement, ce type de laine minérale est fibré par des procédés de centrifugation dits " internes ", c'est-à-dire ayant recours à des centrifugeurs tournant à grande vitesse et percés d'orifices. Ils sont en effet bien adaptés au fibrage de laine minérale de type laine de verre, schématiquement de composition relativement riche en oxydes alcalins, et de température de liquidus moins élevée et de viscosité à température de fibrage plus grande que la laine de roche ou de basalte. Ce type de procédé est notamment décrit dans les brevets EP-0 189 354 ou EP-0 519 797.

Aux critères de qualité et de faisabilité industrielle et économique, s'est ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation.

L'invention a alors pour but d'améliorer la composition chimique des laines minérales, notamment du type verre, amélioration visant notamment à augmenter leur caractère biodégradable et/ou à concilier un caractere biodégradable avec une capacité à être fibrée par centrifugation interne (sans exclure cependant d'autres modes de fibrage).

L'invention a pour objet une laine minérale susceptible de se dissoudre dans un milieu physiologique, qui comprend les constituants ci-après selon les pourcentages pondéraux suivants

| | |
|---|---|
| SiO₂ | 38-52%, de préférence au moins 40%, notamment 41-48% ou 45-50% |
| Al₂O₃ | 16-23%, de préférence 17-21% ou 17-20% |
| RO (CaO et/ou MgO) | 4-15%, de préférence 5-12% ou 5-11% |
| R₂O (Na₂O et/ou K₂O) | 16-25%, de préférence 17-22% ou 17-20% |
| B₂O₃ | 0-10%, notamment au moins 1%, de préférence 3-9% ou 4-10% |
| P₂O₅ | 0-3%; de préférence 0-1,5%, notamment 0 ou supérieur à 0 et d'au plus 0,5% |
| Fe₂O₃ (fer total) | 0-3%, de préférence 0-1,5%, notamment de l'ordre de 0,01 à 1% |
| TiO₂ | 0-2% |

(Dans toute la suite du texte, tout pourcentage d'un constituant de la composition doit se comprendre comme un pourcentage pondéral).

La sélection d'une telle composition a permis de cumuler toute une série d'avantages, notamment en jouant sur les multiples rôles, complexes, que jouent un certain nombre de ses constituants spécifiques.

Ainsi, il s'agit bien d'une composition de laine minérale de type verre : son taux en oxydes alcalins (R₂O) essentiellement sous forme Na₂O et/ou K₂O est supérieur à son taux en oxydes alcalino-terreux (RO), qui est essentiellement sous forme CaO et/ou MgO. Le taux en oxyde de fer (quantifié sous forme de Fe₂O₃ mais correspondant à la teneur totale en fer, par convention) est très modéré, voire nul, le taux en oxyde de bore étant par contre significatif.

La viscosité au fibrage d'une telle composition est appropriée pour une centrifugation interne.

Quant au caractère biodégradable, il était déjà connu que certains composés permettaient de l'améliorer considérablement dans des compositions minérales de type verre notamment, comme le P₂O₅, alors que d'autres oxydes paraissaient au contraire tendre à le diminuer, tout au moins à pH neutre comme l'alumine. On pourra se reporter. par exemple au brevet EP-412 878. Cependant, un ajout massif de P₂O₅ (ou une suppression d'alumine, par exemple) ne s'est pas avéré dans le contexte de l'invention la voie la plus judicieuse. En effet, peuvent intervenir d'autres considérations, par exemple économiques, (le P₂O₅ provenant de matières premières coûteuses) et également techniques : les changements dans les proportions en P₂O₅, et notamment en alumine dans la composition peuvent en faire varier d'autres propriétés dans un sens indésirable ou inconnu. Ainsi, le P₂O₅ n'est pas sans influence sur la viscosité de la composition, tout comme l'alumine. Or, tout particulièrement pour les compositions de type verre à fibrer par centrifugation interne, celles qui intéressent le plus l'invention, le comportement viscosimétrique de la composition est un critère important à maîtriser de façon adéquate.

L'invention a alors établi un compromis judicieux de la façon suivante : la composition peut contenir du P₂O₅, mais dans une teneur modérée d'au plus 3 ou 1,5%. On garde ainsi son effet bénéfique sur la biodégradabilité, sans ajout excessif coûteux et tendant à augmenter la température de liquidus de la composition.

En réglant de façon appropriée les teneurs des principaux autres constituants de la composition, à savoir RO, R₂O, B₂O₃ et SiO₂, on a augmenté par contre significativement la teneur en Al₂O₃, qui est d'au moins 16 à 17%. La teneur en alumine peut ainsi avantageusement être d'au moins 18%, notamment d'au moins 19 ou d'au moins 20%.

Il s'est avéré que cette combinaison permettait de remplir de façon satisfaisante les critères de biosolubilité, aussi bien mesurés selon des tests in vitro à pH neutre que selon des tests in vitro à pH acide. En effet, il n'a pas été tranché de façon définitive sur le point de savoir quel pH était le plus représentatif du milieu physiologique in vivo, notament celui des régions pulmonaires. Un fort taux d'alumine paraissait jusque là être favorable à une dissolution rapide à pH acide mais faible / lente à pH neutre.

L'invention permet d'obtenir un haut niveau de biosolubilité, au moins mesuré in vitro, quel que soit le pH, en sélectionnant un fort taux d'alumine, mais en adaptant la teneur, notamment en RO, R₂O et B₂O₃, de façon à conserver son effet bénéfique à pH acide sans être pénalisant à pH neutre.

Le taux préférentiel en CaO de la composition selon l'invention est avantageusement choisi entre 4 et 11%.

Parallèlement, le taux préférentiel en MgO est choisi entre 0,1 et 7%, notamment 0,3 et 6,5%.

En fait, il est usuel de choisir une teneur en CaO plus importante qu'une teneur en MgO, à teneur en oxydes alcalino-terreux totale donnée, notamment pour des raisons de coûts de matières premières. La teneur en MgO peut ainsi être choisie très faible, voire nulle (par exemple entre 0 et 1% ou être plus élevée, par exemple entre 2 et 6%).

Selon une première variante, on peut ainsi avoir le rapport CaO/MgO ≥ 1,25 notamment ≥ 5 et même ≥ 10.

Cependant, il s'est avéré intéressant, dans le cadre de l'invention, de proposer une seconde variante consistant à prévoir des teneurs en MgO comparables voire supérieures à celles en CaO. On peut ainsi avoir des rapports MgO/CaO ≥ 0,8, et même supérieurs ou égaux à 1 ou 1,05 : ce rapport différent dans les teneurs respectives en CaO et MgO pourrait avoir un impact favorable sur la biodégradabilité de la composition.

Le taux préférentiel en Na₂O de la composition est d'au moins 12%, notamment entre 13 et 19,5%, alors que celui de K₂O est d'au moins 0,5%, notamment entre 0,5 et 8%.

Comme dans le cas des teneurs en CaO et MgO des oxydes alcalino-terreux, on a dans le cas des oxydes alcalins usuellement une teneur nettement plus forte en Na₂O qu'en K₂O. Le K₂O, à teneur en oxydes alcalins totale donnée peut ainsi être en une teneur très faible voire nulle (par exemple inférieur à 3%, compris entre 0,5 et 2,5% notament). Cependant il est possible dans le cadre de l'invention de prévoir également un taux en K₂O significativement plus élevé, par exemple de l'ordre de 5 à 7%, ce qui peut par exemple représenter jusqu'à plus du quart ou même plus du tiers, en poids, de la somme totale des oxydes alcalins dans la composition.

Avantageusement, la composition contient des oxydes alcalino-terreux et alcalins dans la proportion suivante : R₂O/RO > 1,8 notamment compris entre 2 et 4.

A noter que la somme SiO₂ + Al₂O₃ permet de régler pour une bonne part le comportement viscosimétrique des compositions : on préfère que cette somme soit d'au moins 60%, notamment de l'ordre de 61 à 67%.

Quant au taux en oxyde(s) de fer (fer total), comme vu plus haut, il est optionnel. On peut en avoir dans la composition en une faible teneur, ajoutée volontairement ou en tant qu'impureté. Sa présence dans la composition peut jouer favorablement sur la tenue au feu de la laine minérale obtenue.

Comme le fer, la présence de P₂O₅ dans la composition est optionnelle, donc sa teneur peut être soit nulle, soit jusqu'à 0,1%. soit d'au moins 0,1 jusqu'à 1,5 ou 2%.

L'oxyde de bore est un composé optionnel avantageux, jouant notamment un rôle d'agent fondant proche de celui rempli par les oxydes alcalins, et paraissant favorable à la biodégradabilité de laine minérale. Sa présence tend en outre à améliorer les propriétés d'isolation thermique de la laine minérale, notamment en tendant à abaisser son coefficient de conductivité thermique dans sa composante radiative.

La composition peut en outre comporter un certain nombre d'autres composés minoritaires, généralement d'une teneur totale d'au plus 2 à 3% de la composition. Il peut s'agir par exemple de traces de TiO₂, de MnO, de SO₃, ....

La température à laquelle les compositions ont une viscosité égale à log 2,5 (en poises) T_{log 2,5} et /ou une viscosité égale à Log3 (en poise) T_{log 3} est supérieure à la température de liquidus : La différence T_{log 2,5} - T_{liq} et/ou T_{log 3 -} T_{Liq} est de préférence d'au moins 10°C, de préférence d'au moins 20 ou 40°C. Cette différence définit le " palier de travail "des compositions de l'invention, c'est-à-dire la gamme de températures dans laquelle on peut les fibrer, par centrifugation interne tout particulièrement.

Les laines minérales, comme mentionné plus haut, présentent un niveau de biosolubilité satisfaisant, que la méthode de mesure implique un pH neutre, légèrement basique, ou un pH acide.

Les laines minérales selon l'invention présentent ainsi généralement une vitesse de dissolution d'au moins 30, ou d'au moins 40 ou 50 ng/cm² par heure mesurée à pH 4,5 et d 'au moins 30, notamment d'au moins 40 ou 50 ng/cm² par heure mesurée à pH 7,5.

Elles présentent également généralement une vitesse de dissolution d'au moins 30, notamment d'au moins 40 ou 50 ng/cm² par heure mesurée à pH 4,5 et une vitesse de dissolution d'au moins 30, notamment d'au moins 40 ou 50 ng/cm² par heure mesurée à pH 6,9.

Elles présentent généralement aussi une vitesse de dissolution d'au moins 60, notamment d'au moins 80 ng/cm² par heure mesurée à pH 4,5 et/ou une vitesse de dissolution d'au moins 40, notamment d'au moins 60 ng/cm² par heure mesurée à pH 6,9 ou 7,5.

On les utilise principalement pour fabriquer des produits d'isolation thermique et/ou acoustique ou des substrats de culture hors-sol. L'invention a également pour objet tous les produits comprenant au moins pour partie les laines minérales définies plus haut.

D'autres détails et caractéristiques avantageuses ressortent de la description ci-après de modes de réalisation préférés non limitatifs.

Le tableau 1 ci-après regroupe les compositions chimiques, en pourcentages pondéraux, de neuf exemples.

Le tableau 2 regroupe trois autres exemples ou la précision de l'analyse chimique est un peu plus élevée et où figurent également deux caractéristiques physiques, à savoir la température de liquidus (Tliq) et la température à laquelle la viscosité est égale à log 3 exprimée en poises (Tlog3) et égale à log 2,5 exprimée en poises (Tlog2,5), trois températures exprimées en °C.

Quand la somme de toutes les teneurs de tous les composés est légèrement inférieure ou supérieure à 100%, il est à comprendre que la différence d'avec 100% correspond aux impuretés/composants minoritaires qui ne sont pas toujours analysés ou pas analysables à l'état de traces (TiO₂, SO₃) et/ou n'est due qu'à l'approximation acceptée dans ce domaine dans les méthodes d'analyse utilisées.

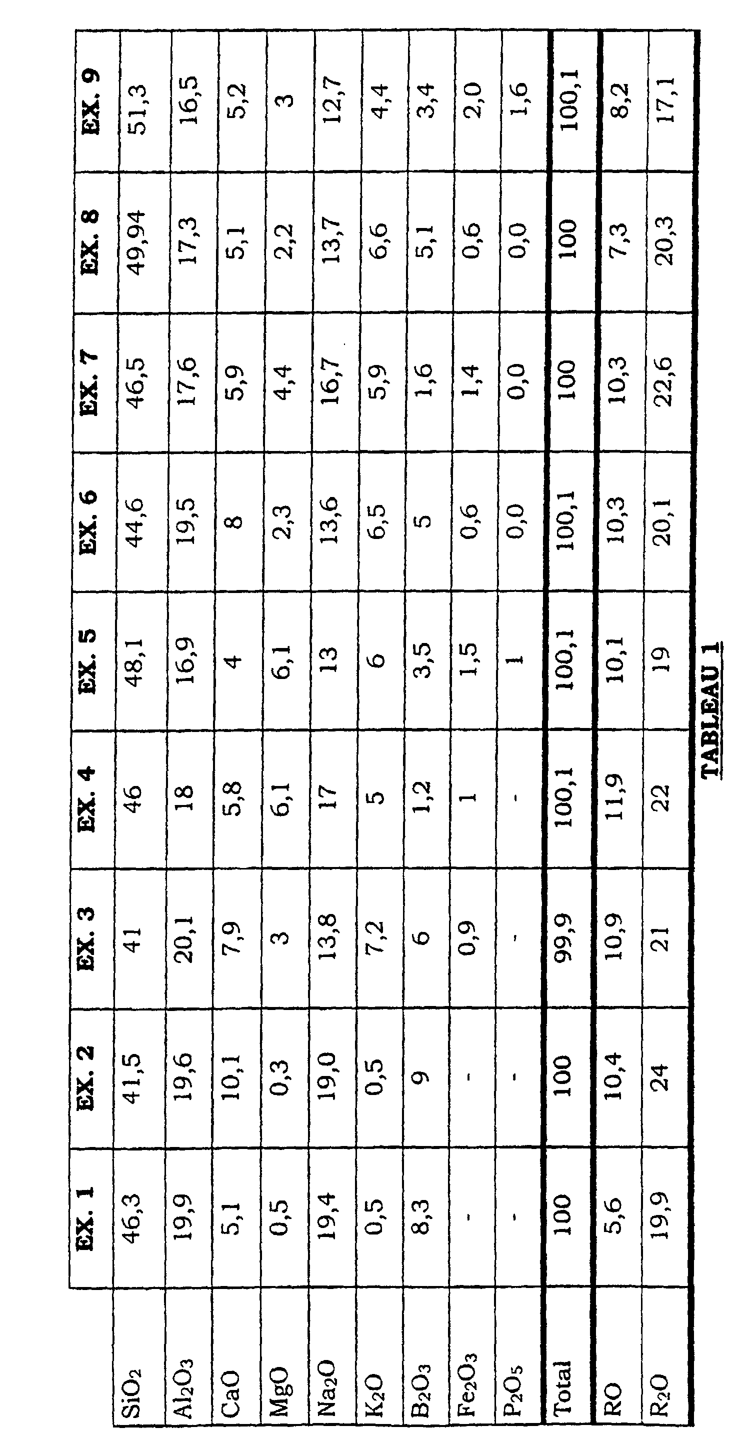

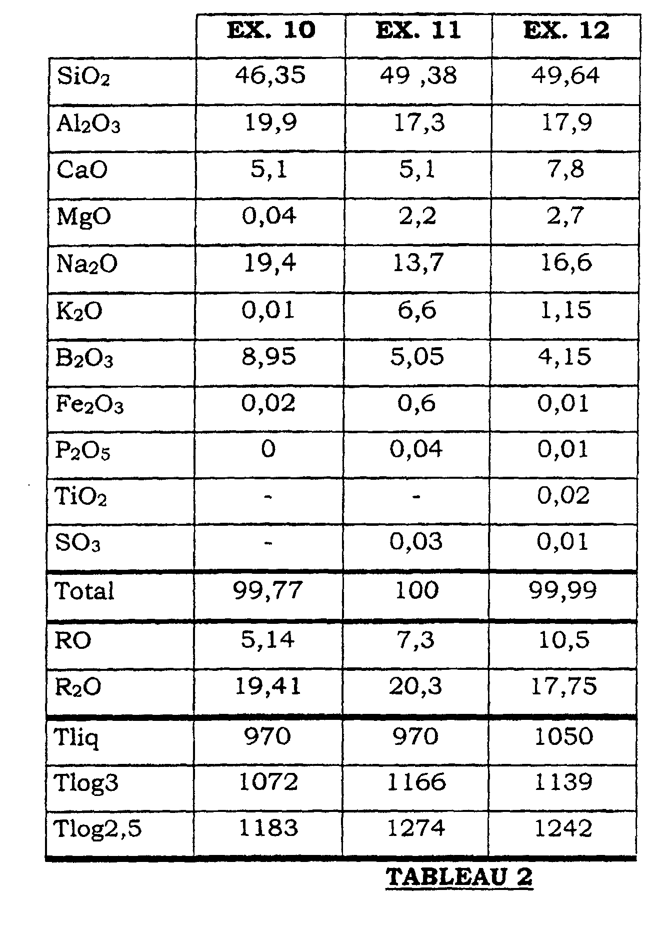

Les compositions sont fibrées par centrifugation interne, de façon connue, notamment selon l'enseignement des brevets précités.

Leurs paliers de travail, définis par la différence T_{log 2,5} - T_{liq}, sont largement positifs.

Leur biodégradabilité, notamment mesurée à pH neutre ou faiblement acide (pH 4,9 ou 7,5), ou à pH acide (4,5) est satisfaisante.

Les exemples 1 et 2 concernent une première variante de l'invention, selon laquelle l'oxyde largement prédominant dans la famille des alcalino-terreux est CaO et l'oxyde largement prédominant dans la famille des alcalins est Na₂O.

Les exemples 3 à 9 concernent une seconde variante, où au contraire les teneurs respectivement en MgO dans la famille des alcalino-terreux, et en K₂O dans la famille des alcalins sont non négligeables.

Les exemples 10 à 12, plus précis dans leurs caractéristiques, montrent que les compositions en question ont de bonnes caractéristiques pour les fondre (T_{liq} pas trop élevés) et une plage de travail suffisamment large pour une mise en oeuvre sans difficultés excessives lors du fibrage.

## Revendications

1. Laine minérale obtenue par fibrage par centrifugation interne et susceptible de se dissoudre dans un milieu physiologique, ***caractérisée en ce qu'elle*** comprend les constituants ci-après selon les pourcentages pondéraux suivants :
| | |
|---|---|
| SiO₂ | 38-52%, de préférence au moins 40%, notamment 41-48% |
| Al₂O₃ | 16-23%, de préférence 17-21% |
| RO (essentiellement CaO + MgO) | 4-15%, de préférence 5-12% |
| R₂O (essentiellement Na₂O + K₂O) | 16-25%, de préférence 17-22% |
| B₂O₃ | 0-10%, notamment au moins 1%, de préférence 3-9% |
| Fe₂O₃ (fer total) | 0-3%, de préférence 0-1,5% |
| P₂O₅ | 0-3%, de préférence 0-1,5% |
| TiO₂ | 0-2% |

2. Laine minérale selon la revendication 1, ***caractérisée en ce qu'elle*** contient entre 4 et 11% de CaO.

3. Laine minérale selon l'une des revendications précédentes, ***caractérisée en ce qu'elle*** contient entre 0,1 et 7% de MgO, notamment entre 0,3 et 6,5% de MgO.

4. Laine minérale selon l'une des revendications précédentes, ***caractérisée en ce qu'elle*** respecte la relation :
MgO / CaO ≥ 0,8, notamment ≥ 1 ou 1,05.

5. Laine minérale selon l'une des revendications 1 à 3, ***caractérisée en ce qu'elle*** respecte la relation :
CaO / MgO ≥ 1,25, notamment ≥ 5 ou ≥ 10

6. Laine minérale selon l'une des revendications précédentes, ***caractérisée en ce qu'elle*** contient au moins 12% de Na₂O, notamment entre 13 et 19,5%.

7. Laine minérale selon l'une des revendications précédentes, ***caractérisée en ce qu'elle*** contient au moins 0,5% de K₂O, notamment entre 0,5 et 8%.

8. Laine minérale selon l'une des revendications précédentes, ***caractérisée en ce qu'elle*** respecte la relation :
R₂O / RO > 1,8, notamment entre 2 et 4

9. Laine minérale selon l'une des revendications précédentes, ***caractérisée en ce qu'elle*** contient :
SiO₂ + Al₂O₃ : au moins 60%, notamment 61-67%

10. Laine minérale selon l'une des revendications précédentes, ***caractérisée en ce qu'elle*** présente une température T_{log2,5} et/ou une température T_{log3}, et une température de liquidus T_{liq}, telles que la différence (T_{log2,5}-T_{liq}) ou (T_{log3}-T_{liq}) est d'au moins 10°C, notamment d'au moins 20, de préférence d'au moins 40°C.

11. Laine minérale selon l'une des revendications précédentes, ***caractérisée en ce qu'elle*** présente une vitesse de dissolution d'au moins 30 ng/cm² par heure mesurée à pH 4,5 et une vitesse de dissolution d'au moins 30 ng/cm² par heure mesurée à pH 7,5.

12. Laine minérale selon l'une des revendications précédentes, ***caractérisée en ce qu'elle*** présente une dissolution d'au moins 30 ng/cm² par heure mesurée à pH 4,5 et une vitesse de dissolution d'au moins 30 ng/cm² par heure mesurée à pH 6,9.

13. Laine minérale selon l'une des revendications précédentes, ***caractérisée en ce qu'elle*** présente une vitesse de dissolution d'au moins 60 ng/cm² par heure mesurée à pH 4,5 et/ou une vitesse de dissolution d'au moins 40 ng/cm² par heure mesurée à pH 7,5 et/ou une vitesse de dissolution d'au moins 40 ng/cm² par heure mesurée à pH 6,9.

14. Produit d'isolation thermique et/ou acoustique ou substrat de culture hors-sol comprenant au moins pour partie la laine minérale selon l'une des revendications précédentes

## Patentansprüche

1. Mineralwolle, die mittels Zerfaserung durch innere Zentrifugierung hergestellt und in einem physiologischen Milieu löslich ist, **dadurch gekennzeichnet, daß** sie die nachstehenden Inhaltsstoffe in den folgenden Prozentanteilen aufweist:
| | |
|---|---|
| SiO₂ | 38 - 52%, bevorzugt mindestens 40%, insbesondere 41 - 48% |
| Al₂O₃ | 16 - 23%, bevorzugt 17- 21% |
| RO (im wesentlichen CaO + MgO) | 4 - 15%, bevorzugt 5 - 12% |
| R₂O (im wesentlichen Na₂O + K₂O) | 16 - 25%, bevorzugt 17- 22% |
| B₂O₃ | 0 - 10%, insbesondere mindestens 1%, bevorzugt 3 -9% |
| Fe₂O₃ (Gesamteisen) | 0 - 3%, bevorzugt 0 - 1,5% |
| P₂O₅ | 0 - 3%, bevorzugt 0 - 1,5% |
| TiO₂ | 0 - 2% |

2. Mineralwolle nach Anspruch 1, **dadurch gekennzeichnet, daß** sie zwischen 4 und 11% CaO enthält.

3. Mineralwolle nach einem der vorhergehenden Ansprüche, **dadurch gekennzeichnet, daß** sie zwischen 0,1 und 7% MgO, insbesondere zwischen 0,3 und 6,5% MgO enthält.

4. Mineralwolle nach einem der vorhergehenden Ansprüche, **dadurch gekennzeichnet, daß** sie das Verhältnis
MgO / CaO ≥ 0,8, insbesondere ≥ 1 oder 1,05
erfüllt.

5. Mineralwolle nach einem der Ansprüche 1 bis 3, **dadurch gekennzeichnet, daß** sie das Verhältnis
CaO / MgO ≥ 1,25, insbesondere ≥ 5 oder ≥ 10
erfüllt.

6. Mineralwolle nach einem der vorhergehenden Ansprüche, **dadurch gekennzeichnet, daß** sie mindestens 12% Na₂O, insbesondere zwischen 13 und 19,5% enthält.

7. Mineralwolle nach einem der vorhergehenden Ansprüche, **dadurch gekennzeichnet, daß** sie mindestens 0,5% K₂O, insbesondere zwischen 0,5 und 8% enthält.

8. Mineralwolle nach einem der vorhergehenden Ansprüche, **dadurch gekennzeichnet, daß** sie das Verhältnis
R₂O / RO > 1,8, insbesondere zwischen 2 und 4
erfüllt.

9. Mineralwolle nach einem der vorhergehenden Ansprüche, **dadurch gekennzeichnet, daß** sie
SiO₂ + Al₂O₃: mindestens 60%, insbesondere 61 - 67%
enthält.

10. Mineralwolle nach einem der vorhergehenden Ansprüche, **dadurch gekennzeichnet, daß** sie eine Temperatur T_{log2,5} und/oder eine Temperatur T_{log3} und eine Liquidustemperatur T_{liq} derart aufweist, daß die Differenz (T_{log2,5} - T_{liq}) oder (T_{log3} - T_{liq}) mindestens 10°C, insbesondere mindestens 20, bevorzugt mindestens 40°C beträgt.

11. Mineralwolle nach einem der vorhergehenden Ansprüche, **dadurch gekennzeichnet, daß** sie eine Lösungsgeschwindigkeit von mindestens 30 ng/cm² pro Stunde gemessen bei pH 4,5 und eine Lösungsgeschwindigkeit von mindestens 30 ng/cm² pro Stunde gemessen bei pH 7,5 aufweist.

12. Mineralwolle nach einem der vorhergehenden Ansprüche, **dadurch gekennzeichnet, daß** sie eine Lösungsgeschwindigkeit von mindestens 30 ng/cm² pro Stunde gemessen bei pH 4,5 und eine Lösungsgeschwindigkeit von mindestens 30 ng/cm² pro Stunde gemessen bei pH 6,9 aufweist.

13. Mineralwolle nach einem der vorhergehenden Ansprüche, **dadurch gekennzeichnet, daß** sie eine Lösungsgeschwindigkeit von mindestens 60 ng/cm² pro Stunde gemessen bei pH 4,5 und/oder eine Lösungsgeschwindigkeit von mindestens 40 ng/cm² pro Stunde gemessen bei pH 7,5 und/oder eine Lösungsgeschwindigkeit von mindestens 40 ng/cm² pro Stunde gemessen bei pH 6,9 aufweist.

14. Wärme- und/oder schalldämmendes Produkt oder Substrat für die erdelose Kultur, welches mindestens zum Teil die Mineralwolle nach einem der vorhergehenden Ansprüche aufweist.

## Claims

1. Mineral wool which is obtained by drawing out fibres by internal centrifuging and which is soluble in a physiological medium, **characterised in that** the mineral wool comprises the constituents below according to the following percentages by weight:
| | |
|---|---|
| SiO₂ | 38-52%, preferably at least |
| | 40%, in particular 41-48% |
| Al₂O₃ | 16-23%, preferably 17-21% |
| RO (substantially CaO + MgO) | 4-15%, preferably 5-12% |
| R₂O (substantially Na₂O + K₂O) | 16-25%, preferably 17-22% |
| B₂O₃ | 0-10%, in particular at |
| | least 1%, preferably 3-9% |
| Fe₂O₃ (total iron) | 0-3%, preferably 0-1.5% |
| P₂O₅ | 0-3%, preferably 0-1.5% |
| TiO₂ | 0-2%. |

2. Mineral wool according to claim 1, **characterised in that** it contains from 4 to 11% of CaO.

3. Mineral wool according to either of the preceding claims, **characterised in that** it contains from 0.1 to 7% of MgO, in particular from 0.3 to 6.5% of MgO.

4. Mineral wool according to any one of the preceding claims, **characterised in that** it complies with the relationship:
MgO/CaO ≥ 0.8, in particular ≥ 1 or 1.05.

5. Mineral wool according to any one of claims 1 to 3, **characterised in that** it complies with the relationship:
CaO/MgO ≥ 1.25, in particular ≥ 5 or ≥ 10.

6. Mineral wool according to any one of the preceding claims, **characterised in that** it contains at least 12% of Na₂O, in particular from 13 to 19.5%.

7. Mineral wool according to any one of the preceding claims, **characterised in that** it contains at least 0.5% of K₂O, in particular from 0.5 to 8%.

8. Mineral wool according to any one of the preceding claims, **characterised in that** it complies with the relationship:
R₂O/RO > 1.8, in particular from 2 to 4.

9. Mineral wool according to any one of the preceding claims, **characterised in that** it contains:
SiO₂ + Al₂O₃: at least 60%, in particular 61-67%.

10. Mineral wool according to any one of the preceding claims, **characterised in that** it has a temperature T_{log2.5} and/or a temperature T_{log3} and a liquidus temperature T_{liq}, such that the difference (T_{log2.5}-T_{liq}) or (T_{log3}-T_{liq}) is at least 10°C, in particular at least 20°C, preferably at least 40°C.

11. Mineral wool according to any one of the preceding claims, **characterised in that** it has a dissolution rate of at least 30ng/cm² per hour measured at pH 4.5 and a dissolution rate of at least 30ng/cm² per hour measured at pH 7.5.

12. Mineral wool according to any one of the preceding claims, **characterised in that** it has a dissolution rate of at least 30ng/cm² per hour measured at pH 4.5 and a dissolution rate of at least 30ng/cm² per hour measured at pH 6.9.

13. Mineral wool according to any one of the preceding claims, **characterised in that** it has a dissolution rate of at least 60ng/cm² per hour measured at pH 4.5 and/or a dissolution rate of at least 40ng/cm² per hour measured at pH 7.5 and/or a dissolution rate of at least 40ng/cm² per hour measured at pH 6.9.

14. Thermal and/or acoustic insulation product or substrate for soil-free culture comprising, at least in part, the mineral wool according to any one of the preceding claims.
